Europäisches Patentamt

**European Patent Office**

**Office européen des brevets**

(11) Numéro de publication: **0 192 550**
**A1**

(12)

# DEMANDE DE BREVET EUROPEEN

(21) Numéro de dépôt: 86400262.1

(22) Date de dépôt: 07.02.86

(51) Int. Cl.⁴: **F 41 G 1/38**
**G 02 B 6/06**

(30) Priorité: 13.02.85 FR 8502036

(43) Date de publication de la demande:
27.08.86 Bulletin 86/35

(84) Etats contractants désignés:
BE CH DE GB IT LI

(71) Demandeur: **Pierre, Bernard**
**7, rue Lauriston**
**F-75116 Paris(FR)**

(72) Inventeur: **Pierre, Bernard**
**7, rue Lauriston**
**F-75116 Paris(FR)**

(74) Mandataire: **Bouju, André**
**Cabinet Bouju 38 avenue de la Grande Armée**
**F-75017 Paris(FR)**

(54) **Dispositif de visée pour arme individuelle.**

(57) Le dispositif de visée pour arme individuelle selon l'invention comporte un objectif (1) et des moyens (5, 6) pour fixer l'objectif (1) à une arme individuelle (4) selon une direction concourante avec une ligne de tir de cette arme, et est caractérisé en ce qu'il comporte un câble optique (8) formé de fibres optiques (9) géométriquement ordonnées dont une première extrémité est fixée à l'objectif (1) et dont une seconde extrémité opposée à la première extrémité est fixée à au moins un oculaire mobile (11.1, 11.2).

Selon un mode de réalisation préféré, la seconde extrémité du câble optique (8) est dédoublée en deux parties de câble (8.1, 8.2) chacune reliée à un oculaire (11.1, 11.2) de préférence monté sur une monture de lunette (16).

FIG.1

EP 0 192 550 A1

La présente invention concerne un dispositif de visée pour arme individuelle.

Depuis leur origine, ou presque, les armes individuelles sont équipées d'un dispositif de visée. Le dispositif de visée comprend généralement un oeilleton et un guidon formant une ligne de mire que le tireur doit aligner avec l'objectif en vue d'atteindre celui-ci. Dans des dispositifs de visée plus perfectionnés, l'oeilleton et le guidon sont remplacés par une lunette de visée rigide dont l'axe optique remplace la ligne de mire du dispositif antérieur.

Dans un cas comme dans l'autre, il est nécessaire pour le tireur d'amener le dispositif de visée devant son oeil, c'est-à-dire d'épauler son arme. Etant donné le poids d'une arme, et plus particulièrement d'une arme automatique, il est habituel pour le tireur de ne pas maintenir son arme à l'épaule lorsqu'il est en état de veille. La nécessité d'épauler pour viser entraîne donc un retard dans le tir et ce retard est préjudiciable à la rapidité d'intervention.

De plus, dans le cas d'une arme de tir en rafale, il est connu que la dispersion du tir est plus importante lorsque l'arme est épaulée que lorsque l'arme est maintenue à la hanche en raison du décalage par rapport au centre de gravité du tireur. Il est donc souhaitable d'effectuer un tir en rafale en maintenant l'arme à la hanche mais dans ce cas le dispositif de visée classique est inutilisable et la précision du tir est donc faible.

Enfin, lorsque le tireur utilise un système de visée classique, sa tête est disposée dans la ligne de mire et est donc visible pour un adversaire, ce qui lui donne une possibilité de riposte et compromet donc la sécurité du tireur.

2                                    0192550

Un but de la présente invention est de proposer un dispositif de visée qui ne présente pas les inconvénients mentionnés ci-dessus et permette une intervention rapide, efficace et en toute sécurité au moyen d'une arme individuelle.

En vue de la réalisation de ce but, on prévoit selon l'invention un dispositif de visée pour arme individuelle comportant un objectif et des moyens pour fixer l'objectif sur une arme individuelle selon une direction concourante avec une ligne de tir de cette arme, caractérisé en ce qu'il comporte un câble optique formé de fibres optiques géométriquement ordonnées dont une première extrémité est fixée à l'objectif et dont une seconde extrémité opposée à la première extrémité est fixée à au moins un oculaire mobile.

Ainsi, le câble optique réalise une liaison optique souple entre l'oculaire et l'objectif. L'oculaire peut donc être fixé à la tête du tireur, tandis que l'arme est maintenue à distance de celui-ci, par exemple à la hanche, sans nuire à la qualité de la visée. Il est donc facile pour le tireur de maintenir son arme dans une position de veille qui correspond également à une position de tir. De plus, dans le cas d'un risque de riposte, le dispositif de visée selon l'invention permet au tireur de se mettre à l'abri, par exemple derrière un écran et, néanmoins, de diriger l'arme vers l'objectif en exposant seulement les mains au tir de l'adversaire ; en particulier, le dispositif selon l'invention permet d'effectuer un tir à partir de l'embrasure d'une fenêtre sans mettre le tireur à découvert.

Selon une version avantageuse de l'invention, l'oculaire mobile comporte des moyens pour assurer une visée à travers l'objectif ou une observation directe Ainsi, le tireur garde l'oculaire constamment devant l'oeil et effectue néanmoins une observation générale des lieux qui l'entourent tout en restant prêt à effectuer instantanément une visée à travers le dispositif selon l'invention.

Selon un mode de réalisation préféré de l'invention, les moyens pour assurer une visée à travers l'objectif ou une observation directe comportent une vitre semi-réfléchissante. Ainsi, l'oculaire reste compact et léger, et n'entraîne qu'une faible déformation lors de l'observation directe.

Selon un autre aspect préféré de l'invention, l'oculaire est porté par une monture de lunette. Ainsi, le tireur se met aisément au repos en retirant la monture de lunette.

Selon encore un aspect préféré de l'invention, le câble optique a sa seconde extrémité dédoublée en deux parties de câble et un oculaire est fixé à une extrémité libre de chaque partie de câble. Ainsi, le tireur a une vision binoculaire de l'objectif et la visée en est donc rendue plus aisée.

D'autres caractéristiques et avantages de l'invention résulteront encore de la description ci-après d'un exemple non limitatif en référence aux dessins annexés dans lesquels :

- la figure 1 est une représentation schématique du dispositif de visée selon l'invention en place sur une arme individuelle ;

- la figure 2 est une vue en coupe longitudinale agrandie d'un dispositif de visée semblable à celui de la figure 1 mais avec un seul oculaire.

En référence aux figures, le dispositif selon l'invention comporte un objectif 1 comprenant de façon classique un système optique symbolisé par des lentilles 2 et 3 montées dans l'objectif 1.

L'objectif 1 est lui-même monté de façon rigide sur une arme individuelle 4, par exemple un fusil automatique par des moyens de fixation permettant de régler la hausse de l'objectif 1 par rapport à l'arme 4. Les moyens de fixation comportent par exemple des vis 5 coopérant avec des molettes 6 montées de façon à pouvoir tourner sur elles-mêmes sur un support 7 fixé à l'arme individuelle 4. La rotation des molettes 6 entraîne une modification de l'orientation de l'objectif 1 et permet en particulier de disposer celui-ci selon une direction concourante avec une ligne de tir de l'arme individuelle 4 comme cela est réalisé habituellement pour une lunette de visée.

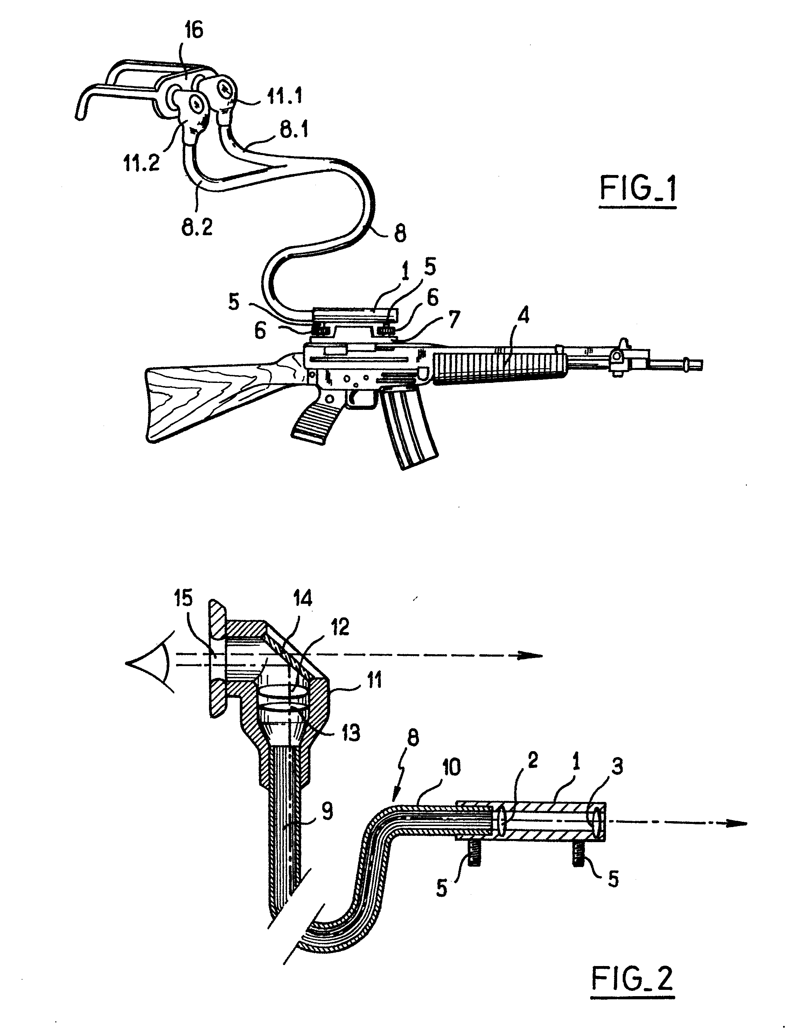

Selon l'invention, le dispositif de visée comporte un câble optique 8 formé de fibres optiques 9, géométriquement ordonnées. A titre d'exemple, et comme représenté sur la figure 2, les fibres optiques 9 s'étendent parallèlement les unes aux autres et sont entourées par une gaine souple 10.

Une première extrémité du câble optique 8 est fixée à l'objectif 1 et une seconde extrémité opposée à la première extrémité est fixée à un oculaire mobile 11 (figure 2) comportant un système optique symbolisé par des lentilles 12 et 13. On sait qu'un faisceau ordonné de fibres optiques transmet l'image reçue par l'objectif sans déformation et il est donc inutile de rentrer dans le détail du système optique formé par les lentilles 12, 13 qui est, d'une façon connue en soi, semblable à un oculaire de lunette de visée rigide.

Selon un mode de réalisation avantageux, l'oculaire mobile 11 comporte des moyens pour assurer une visée à travers l'objectif ou une observation directe. Ces moyens comportent de préférence une vitre semi-réfléchissante 14 disposée à 45° par rapport à la direction du câble optique 9 à son entrée dans l'oculaire 11 et par rapport à une ouverture de sortie 15 dans l'oculaire 11. Ainsi, un observateur dont l'oeil est situé derrière l'oculaire 11, en face de l'ouverture 15, peut effectuer une visée à travers l'objectif 1 par l'intermédiaire du câble optique 8 et du système optique 12, 13, l'image se réfléchissant sur la vitre semi-réfléchissante 14 selon le trajet symbolisé en traits mixtes sur la figure 2, ou effectuer une observation directe à travers la vitre semi-réfléchissante 14 selon le trajet symbolisé en traits tiretés sur la figure 2.

Selon un autre aspect avantageux représenté schématiquement sur la figure 1, le câble optique 8 a sa seconde extrémité dédoublée en deux parties de câble 8.1 et 8.2 et un oculaire, respectivement 11.1 et 11.2, est fixé à une extrémité libre de chaque partie de câble 8.1 , 8.2.

Afin d'effectuer une bonne transmission de l'image, chacune des parties de câble 8.1 et 8.2 comprend de préférence la moitié des fibres optiques 9 contenue dans la partie commune 8, chaque partie de câble 8.1, 8.2 étant obtenue en regroupant des fibres optiques 9 déviées à partir de la partie commune 8 suivant une distribution uniforme selon une coupe transversale du câble optique 8.

De préférence, les oculaires 11.1 et 11.2 sont portés par une monture de lunette 16.

Bien entendu, l'invention n'est pas limitée aux modes de réalisation décrits ci-dessus et on peut y apporter des variantes d'exécution.

Ainsi, au lieu d'être montés sur une monture de lunette, les oculaires peuvent être fixés à un casque, de préférence de façon amovible.

6                                    **0192550**

Bien que l'arme individuelle 4 ait été représentée sur la figure 1 avec une crosse conventionnelle, l'invention permet de remplacer cette crosse, qui présente généralement un inconvénient sur le plan de l'encombrement et du poids, par une structure de conception ergonomique adaptée à la position de tir la plus favorable, par exemple, adaptée au tir à la hanche.

L'objectif 1 peut également être fixé de façon totalement rigide sur l'arme individuelle 4 et comporter de façon interne un dispositif de réglage de hausse ou plus simplement une grille de hausse incorporée au système optique 2,3.

## REVENDICATIONS

1. Dispositif de visée pour arme individuelle comportant un objectif (1) et des moyens (5, 6) pour fixer l'objectif (1) à une arme individuelle (4) selon une direction concourante avec une ligne de tir de cette arme, caractérisé en ce qu'il comporte un câble optique (8) formé de fibres optiques (9) géométriquement ordonnées dont une première extrémité est fixée à l'objectif (1) et dont une seconde extrémité opposée à la première extrémité est fixée à au moins un oculaire mobile (11).

2. Dispositif de visée conforme à la revendication 1, caractérisé en ce que l'oculaire mobile (11) comporte des moyens (14) pour assurer une visée à travers l'objectif (1) ou une observation directe.

3. Dispositif de visée conforme à la revendication 2, caractérisé en ce que les moyens pour assurer une visée à travers l'objectif (1) ou une observation directe comportent une vitre semi-réfléchissante (14).

4. Dispositif de visée conforme à l'une des revendications 1 à 3, caractérisé en ce que l'oculaire (11) est porté par une monture de lunette (16).

5. Dispositif de visée conforme à l'une des revendications 1 à 4, caractérisé en ce que le cable optique a sa seconde extrémité dédoublée en deux parties de câble (8.1, 8.2) et en ce qu'un oculaire (11.1, 11.2) est fixé à une extrémité libre de chaque partie de câble (8.1, 8.2).

FIG_1

FIG_2

Office européen
des brevets

**RAPPORT DE RECHERCHE EUROPEENNE**

0192550
Numéro de la demande

EP  86 40 0262

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 453 303  (F. BECHER)<br><br>* Page 2, lignes 18-34; pages 3,4; revendications 1,2,6,8 *<br><br>--- | 1,2,4, 5 | F 41 G    1/38<br>G 02 B    6/06 |
| X | GB-A-1 193 257  (SPERRY BAND)<br>* En entier *<br><br>--- | 1-4 | |
| A | FR-A-2 522 804  (THOMSON)<br>* Figure 2; revendications 1,4 *<br><br>----- | 1-3 | |

|  |  |
|---|---|
|  | **DOMAINES TECHNIQUES RECHERCHES (Int. Cl.4)**<br><br>F 41 G<br>G 02 B |

Le présent rapport de recherche a été établi pour toutes les revendications

| Lieu de la recherche<br>LA HAYE | Date d'achèvement de la recherche<br>21-05-1986 | Examinateur<br>PFAHLER R. |
|---|---|---|